# EUROPEAN PATENT SPECIFICATION

(11) **EP 3 072 641 B1**
(45) Date of publication and mention of the grant of the patent: **15.08.2018**
(21) Application number: 14864490.9
(22) Date of filing: 22.04.2014
(51) Int. Cl.: B25J 5/00, B25J 9/00, B62D 55/02, G05D 1/00, G05D 1/02, F41H 11/16, B25J 11/00, B25J 13/06, B25J 15/02

(54) **REMOTELY CONTROLLED ROBOTIC VEHICLE**
FERNGESTEUERTES ROBOTERFAHRZEUG
VÉHICULE ROBOTISÉ TÉLÉCOMMANDÉ

(30) Priority: 19.11.2013 ES 201331685
(43) Date of publication of application: 28.09.2016
(73) Proprietor: Proytecsa Security, S.L., 22500 Binefar (Huesca) (ES)
(72) Inventor: SALLEN ROSELLÓ, César, 22500 BINEFAR (Huesca) (ES)
(74) Representative: Ungria López, Javier
(86) International application number: PCT/ES2014/070340
(87) International publication number: WO 2015/075283

(56) References cited:
- EP-A2- 1 502 843
- EP-A2- 1 502 843
- WO-A2-2012/074690
- WO-A2-2012/074690
- CN-A- 102 490 171
- CN-U- 202 045 634
- US-A- 4 773 298
- US-A- 4 773 298
- US-A- 6 113 343
- US-A1- 2007 297 320
- US-A1- 2009 037 033
- US-B1- 7 475 745
- US-B1- 7 475 745

## Description

### OBJECT OF THE INVENTION

The present invention, as expressed in the heading of the present specification, relates to a remote-controlled robotic vehicle which is of the type of robotic vehicles whose main purpose is the detection, recognition and deactivation of explosive devices or that are dangerous to society.

This way, the remote-controlled robotic vehicle object of the invention combines a movement system based on two lateral trains of wheels and two caterpillar tracks with the purpose of facilitating the movement thereof along smooth ground and along any other kind of irregular or slippery ground.

Likewise, since the remote-controlled robotic vehicle object of the invention is provided with a pair of articulated arms, one of the arms can hold an object and the other arm can examine it.

### FIELD OF APPLICATION

The present specification describes a remote-controlled robotic vehicle, which has an average size capable of handling objects of up to 200 kilograms in weight, and is especially applicable to police, military and even civil intervention missions in missions involving a certain degree of risk.

Thus, the remote-controlled robotic vehicle is applicable in the face of actions intended to attack society structures, such as the placement or alleged placement of explosive devices, "dirty" bombs, attacks with chemical gases, biological material or the dispersal of radioactive elements.

Likewise, the remote-controlled robotic vehicle can undertake independent surveillance missions in perimeters, borders, industries or places where independent surveillance can be of use.

### BACKGROUND OF THE INVENTION

Conventionally, when it has been necessary to handle explosive devices or perform risky operations, and even more so when human lives are at risk, robots that are remotely operated by means of a control console have been used.

Among robots existing for the handling of explosive devices, there are the type which include an articulated arm, with a single segment, and without any possibility of rotating on a horizontal plane. This type of robot only has movement on a vertical plane and is limited by its single articulated segment.

Likewise, this type of robot has a series of control elements, such as viewing cameras and proximity sensors.

We can also take into account patent documents ES 2 241 490 and ES 1 073 757, such that document ES 2 241 490 describes a "*self-propelled robot for the handling of explosive charges*"*,* which comprises means of movement defined by two width-adjustable lateral caterpillar tracks and which incorporate an articulated arm, in four segments, which terminates in a clamp, with the first segment in the form of a fork actuated by a pair of cylinders, and in the folding thereof the clamp body passes between the pair of prongs of the first segment.

On the other hand, document ES 1 073 757 describes a "*remote-controlled robot for special operations*", being of the type of robots used to carry out risky operations and having a running gear, a telescopic arm which terminates in a clamp and remote control and operation means, such that the robot incorporates a 360° rotating turret on the running gear provided with at least one thermal camera, and to which turret an arm constituted by a series of six segments is attached, which are pivotally joined to each other and actuated by hydraulic cylinders, the arm having at least one camera and at least one deterrent weapon.

Based on this type of build, each joint of the arm is directly controlled by the operator, which implies that, in order for the clamp to approach an object with the desired position and angle, the operator must act independently and successively with respect to each articulated movement until the desired position is finally achieved, which requires skill and time in the operation.

In addition, the control of force in the hydraulic clamps is practically impossible and even more so in the case of delicate objects, which is an inconvenience.

Document CN 202045634 U discloses a remote-controlled robotic vehicle for handling explosives having two articulated arms.

Document EP 1 502 843 A2 discloses a robotic vehicle for handling explosives having two wheel sets and two caterpillar sets inside the wheel sets and slightly above the wheel sets.

Document US 4 773 298 A discloses a robotic vehicle for handling explosives having two articulated arms which can have combined movements to hold and handle an object.

On the other hand, we can also take into account patent documents US 6113343 A; JP 2000326875 and DE 2409027 A1, such that document US 6113343 presents an explosives disposal robot, which presents a base structure for a manipulator arm constituted by a first arm 226 (constituted by a pair of beam members 230) and a second arm 228 (likewise constituted by a pair of beam members, that is to say, they are actually pairs of arms), each of which is actuated independently with respect to the corresponding rotation axis.

Document JP 200032875 describes a link chain device to move a working vehicle, which vehicle can vary its own width, for which each one of the running gears incorporates a pair of elements such that said pairs, attached to both running gears, fit into respective tubular elements that are integral to the structure of the vehicle itself.

Finally, document DE 2409027 describes a leveling blade, such that the width of the leveling blade can be adjusted with the purpose of travelling by road, being adjustable by means of respective sliding ends.

### DESCRIPTION OF THE INVENTION

The present specification describes a remote-controlled robotic vehicle as defined in the appended claim 1 of the type of robotic vehicles provided with running means and an articulated arm which terminates in a clamp, which is remotely controlled to carry out different risky operations, wherein
- the robotic vehicle comprises:
   ✔ two wheel sets, one at each side, with three drive wheels each, each wheel set being actuated by corresponding motors;
   ✔ two caterpillar track sets, one at each side inside of the wheel sets, slightly above the wheel sets;
   ✔ a first hydraulic articulated arm mounted, through double joint means, on a 360° rotating turret by the central axis; wherein the first hydraulic articulated arm is defined by three segments, the third segment being provided with ±90° lateral rotation and a first clamp being provided with endless rotation;
   ✔ a second electric articulated arm that rotates with respect to a vertical mounting axis, and; and which robotic vehicle is remote controlled by:
- control equipment integrated in a box, which comprises:
   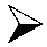 a display screen of images sent by cameras mounted on the robotic vehicle;
   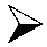 a touch screen in a horizontal interface position with the operator, and;
   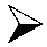 an HMI interface device defined by a gamepad;
such that, with the two wheel sets and the two caterpillar track sets, it moves along all kinds of ground, and with the combined movements of the two articulated arms, it holds and handles the objects to be examined according to the orders given by the transportable control equipment.

Moreover, according to further embodiments, as defined in the appended dependent claims 2 to 15, the robotic vehicle can be provided with the following features:
Each set of lateral drive wheels is actuated by an electric motor, having traction in a differential manner and providing direction and rotation.

The first articulated arm, in a practical embodiment, is defined by three segments and a first clamp, the third segment being provided with ±90° lateral rotation and the first clamp being provided with endless rotation.

The weight handling capacity of the first articulated arm varies depending on the articulation positions thereof, such that the more it extends, the lower the capacity.

The second articulated arm is defined by three segments and a second clamp, the third segment being provided with 360° rotation with respect to the longitudinal axis and an elevation/descent rotation with respect to a transversal axis, while the second clamp is provided with endless rotation.

The first clamp of the first hydraulic articulated arm is provided with a pressure sensor associated with the supply of flow and pressure, being able to regulate and know the precise force exerted on the object to be handled.

Likewise, the force or pressure exerted by the second clamp of the second articulated arm is controlled by the control of the electric current of the motor actuating the same.

The control means of the robotic vehicle have a spatial calculation system, and whenever the control operator of the robotic vehicle selects the position of the corresponding clamp with respect to the object to be handled, the articulated arm will carry out the precise and simultaneous movements of its different segments to position itself optimally for the handling of the object, carrying out said movements in a fast and precise manner.

The first clamp of the first articulated arm is provided at its ends with mechanical joints having a short range which, associated to inner springs thereof, shall be the ones to withstand the pressure exerted on the object to be handled.

Likewise, the inner springs of the first clamp of the first articulated arm are associated with electronic distance sensors.

Therefore, as of a certain compression of the mechanical joints of the first clamp of the first articulated arm, a highly resistant mechanical stop is produced, as of which the first clamp keeps compressing outside of the force detection range of the electronic sensors, and the hydraulic pressure sensor is the one detecting and providing the exerted force.

The robotic vehicle incorporates inertial sensors based on accelerometers associated with the drive shaft of the wheel set, having its global positioning and being able to move independently according to the routes set by the operator in the control equipment, and also incorporating obstacle sensors allowing it to avoid obstacles during the route and to return to the set route.

Likewise, the control equipment incorporates means to connect to Internet in order to be controlled from anywhere and to connect to mobile devices from which it can be controlled.

In order to supplement the description to be made below, and with the purpose of facilitating a better comprehension of the characteristics of the invention, a set of drawings is attached to the present specification, in which figures the most characteristic details of the invention are represented in an illustrative rather than limiting manner.

### BRIEF DESCRIPTION OF THE DRAWINGS

Figure 1. Shows a lateral elevation view of the robotic vehicle with the first and second articulated arms folded in the transport or resting position, showing how the second and third segment of the second articulated arm are on top of the first segment thereof, as well as the control equipment based on a box that integrates the control elements.
Figure 2. Shows a frontal view of the robotic vehicle of the previous figure, showing the vertical mounting axis of the second articulated arm.
Figure 3. Shows a rear perspective view of the robotic vehicle, showing the inner part of a wheel set and of a caterpillar track set and the first and second articulated arms, folded.

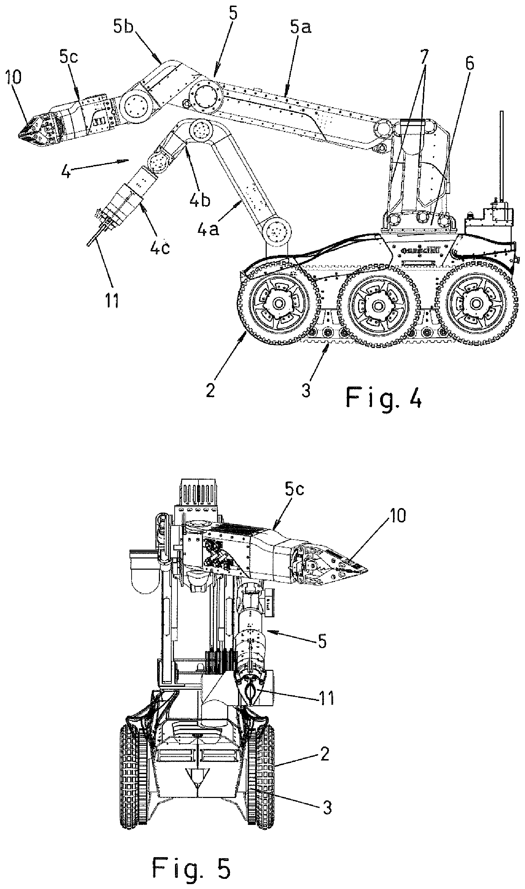

Figure 4. Shows a lateral elevation view of the robotic vehicle with the first and second articulated arms in an extended position, showing the 360° rotating turret with the double articulating means of mounting of the first articulated arm for the movement thereof on to its longitudinal axis.
Figure 5. Shows a frontal view of the robotic vehicle of the previous figure, showing how the third segment of the first articulated arm has been rotated to one side.

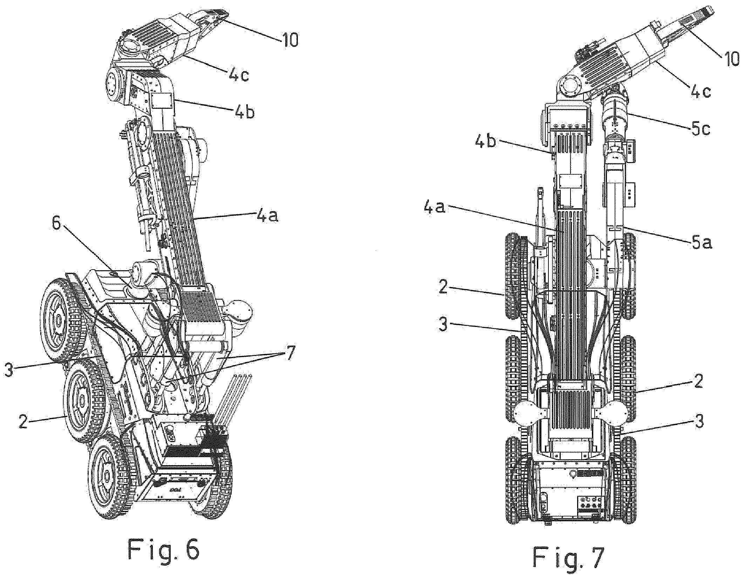

Figure 6. Shows a plan view of figure 4, showing the rotation of the third segment of the first articulated arm to one side.
Figure 7. Shows a rear perspective view of the robotic vehicle of figure 4, showing the rotation of the third segment of the first articulated arm to one side, as well as the double articulating means of mounting of the first articulated arm in the turret.
Figure 8. Shows a lateral elevation view of the robotic vehicle of figure 1, the first articulated arm being represented according to different extended positions and the second articulated arm being folded.
Figure 9. Shows a lateral view of the robotic vehicle of figure 1, the first and the second articulated arms being in the position of maximum frontal extension.

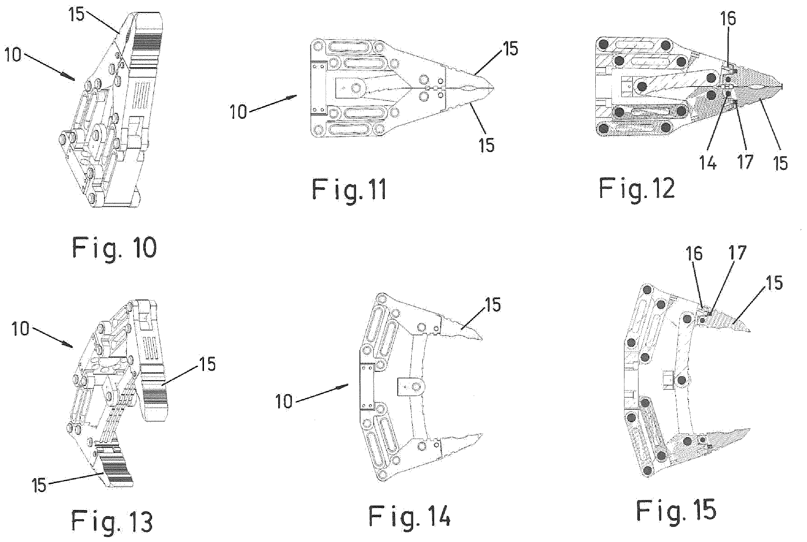

Figures 10, 11 and 12 show a perspective view, a lateral elevation view and a longitudinal section of the first clamp of the first articulated arm in the closed position.
Figures 13, 14 and 15 show a perspective view, a lateral elevation view and a longitudinal section of the first clamp of the first articulated arm in the open position.
Figure 16. Shows a plan view of the transmission of movement to the two wheel sets by corresponding motors.
Figure 17. Shows a view of the rotation axis of the turret upon which the first articulated arm, articulated by means of a double joint, is mounted.
Figure 18. Shows a perspective view of the double joint fixed to the turret and on which the first articulated arm is mounted, such that it only shows one of the joints while the other remains hidden.

### DESCRIPTION OF A PREFERRED EMBODIMENT

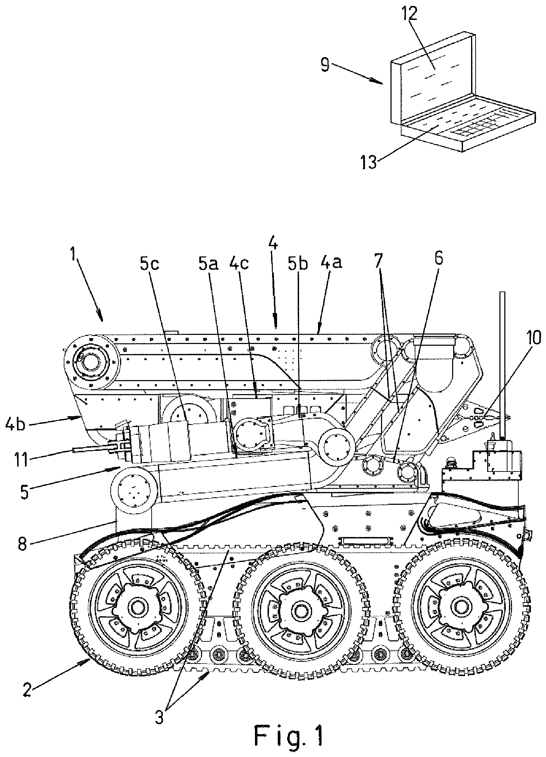

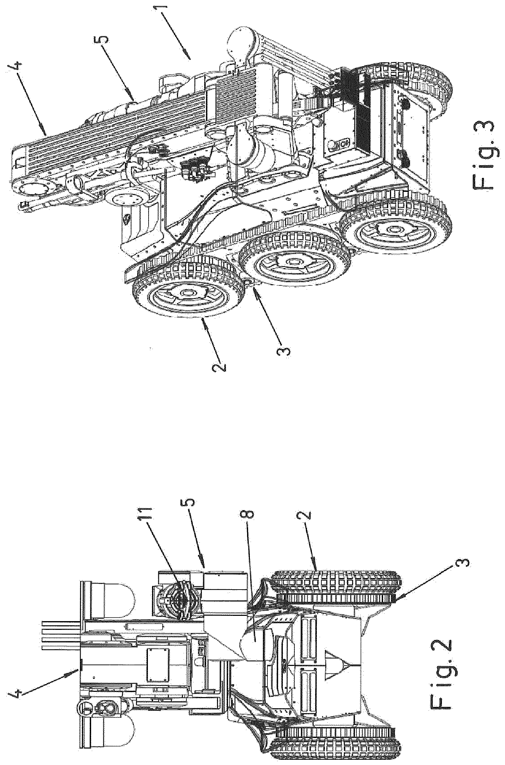

Based on the aforementioned figures and according to the numbering adopted above, we can see how the robotic vehicle 1 is provided with two wheel sets 2, one at each side, comprised by three wheels each, each wheel set 2 being actuated by the corresponding motor, and two caterpillar track sets 3, one at each side inside the wheel sets 2, the caterpillar track sets 3 being disposed slightly above the wheel sets 2, as shown in figures 1 and 2 of the drawings, such that both sets move together and the main contact with the ground corresponds to the wheel set 2, given that the two caterpillar track sets 3 remain in a slightly elevated position.

With this execution a silent and smooth movement is achieved by means of the two wheel sets 2 on smooth or prepared pavement, such as concrete or asphalt, while the caterpillar track sets 3 will enter into contact and transmit traction to the pavement should there be irregular ground, unprepared soil, slippery ground, sand or soft ground, thereby having the capacity to go over stairs and to enable traction on a continuous basis.

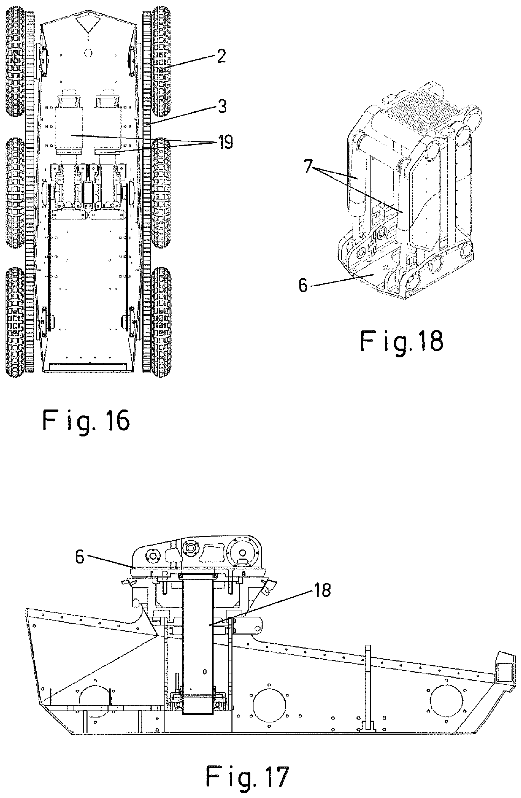

The robotic vehicle is directed through the use of the electric motors 19, which act independently on the wheel sets 2, such that it enables traction in a differential manner, providing direction and even rotation around its own axis or around the central vertical axis, as shown in figure 16 of the drawings.

The movement controls are carried out by means of closed loop systems in the form of digital servomechanisms.

Likewise, the robotic vehicle 1 incorporates a first hydraulic articulated arm 1 mounted on a 360° rotating turret 6 through universal joint means 7, enabling movement thereof with respect to the longitudinal axis of the aforementioned first articulated arm 4, and a second electric articulated arm 5 that rotates with respect to a vertical mounting axis 8.

This way, figure 17 of the drawings shows the rotation axis 18 of the turret 6 to enable 360° rotation thereof, and figure 18 of the drawings shows the double joint 7 through which the first articulated arm 4 is mounted in the turret 6.

The robotic vehicle 1 is associated with control equipment integrated in a box 9 that comprises a display screen 12 of images sent by cameras mounted on the robotic vehicle 1, a touch screen 13 in horizontal interface position with the operator, and an HMI interface device defined by a games controller "gamepad".

This way, with the two wheel sets 2 and the two caterpillar track sets 3, it moves along all types of ground and with the combined movements of the first articulated arm 4 and of the second articulated arm 5, it holds and handles, with the first and second clamp, the objects to be examined according to the orders given by the operator from the transportable control equipment, that is to say, the box 9 integrating the components in the form of a PC.

The first articulated arm 4 is defined by three segments, 4a, 4b and 4c, the third segment 4c being provided with ±90° lateral rotation and the first clamp 10 being provided with endless rotation, such that the weight handling capacity of this first articulated arm 4 varies depending on the articulation positions, such that the more it extends, the lower the capacity.

This way, the first articulated arm 4 will have the following movements:
- rotation of the turret 6 around its central vertical axis;
- forward and backward movement of the turret 6 by means of a double articulated parallelogram 7 or double trapezoid;
- elevation of the first segment 4a;
- elevation and folding of the second segment 4b;
- elevation and folding of the third segment 4c;
- +- 90-degree lateral rotation of the third segment 4c;
- continuous endless rotation of the first manipulator clamp 10, and;
- opening and closing of the first clamp 10.

On the other hand, the second articulated arm 5 is defined by three segments 5a, 5b and 5c, the third segment 5c being provided with 360° rotation with respect to the longitudinal axis and the second clamp 11 being provided with endless rotation.

The second articulated arm 5 will have the following movements:
❖ rotation around its vertical axis 8 at its base;
❖ elevation of the first segment 5a;
❖ elevation and folding upon itself of the second segment 5b;
❖ full 360° rotation around its longitudinal axis of the third segment 5c;
❖ elevation and/or rotation around the transversal axis of the third segment 5c;
❖ continuous rotation of the second clamp 11, and;
❖ opening and closing of the second clamp 11.

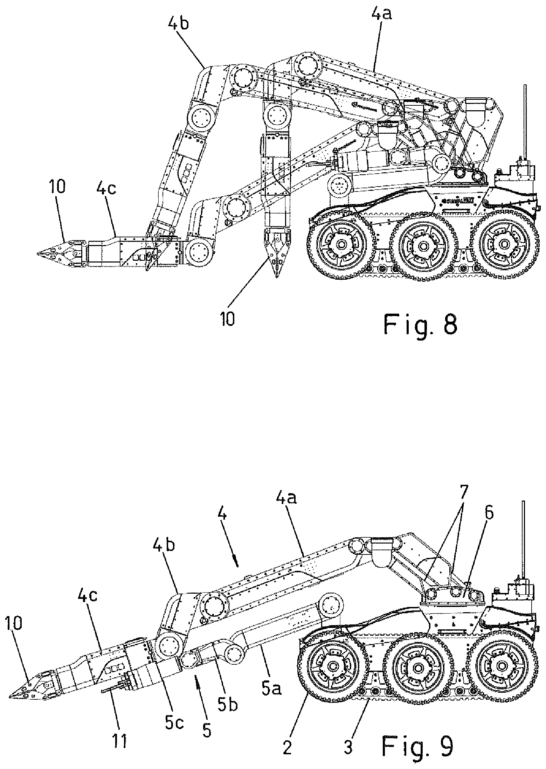

Figure 9 of the drawings clearly shows the different segments making up the first and the second articulated arms, as well as the double joint 7 through which the first articulated arm 4 is joined to the turret 6.

The first clamp 10 of the first hydraulic articulated arm 4 is provided with a pressure sensor associated with the supply of flow and pressure, being able to regulate and know the precise force exerted on the object to be handled.

On the other hand, the force or pressure exerted by the second clamp 11 of the second articulated arm 5 is controlled by the control of the electric current of the motor actuating the same.

The control means of the robotic vehicle 1 have a spatial calculation system, and whenever the control operator of the robotic vehicle 1 selects the position of the corresponding clamp with respect to the object to be handled, the articulated arm will carry out the precise and simultaneous movements of its different segments to position itself optimally for the handling of the object.

In addition, the first clamp 10 of the first articulated arm 4 incorporates means to control the force exerted therein, which makes it possible to control forces from a few grams to up to a few kilograms, especially for the handling of very delicate objects.

Until now, the control of forces of the type described above by means of hydraulic elements was practically impossible.

This way, the first clamp 10 is provided with mechanical joints 14 having a short range, at the ends 15 of the jaws constituting the same, such that the joint makes it possible to place inner springs 16 in the structure of the first clamp 10 itself in order for the first pressure exerted to be transmitted to the inner springs 15, thereby maintaining, by definition, the pressure on the object being held.

By means of the "hall" effect magnetic principle, electronic distance sensors 17 make it possible to know the compression (in distance) of the inner spring 16, calculating in consequence the force exerted or maintained by the same.

As of a certain compression or movement of these joints, a highly resistant mechanical stop is produced as of which this first clamp 10 can keep compressing the object outside of the range of detection of the force provided by this design, reaching ranges of force of the order of tons. This way, the hydraulic pressure sensor is the one providing the information of the exerted force.

Said design therefore makes it possible to know and control, with the same clamp and with excellent precision, forces from a few grams to a few tons.

Likewise, the robotic vehicle 1 incorporates inertial sensors based on accelerometers associated with the drive shaft of the wheel set, having its global positioning and being able to move autonomously according to the routes set by the operator in the control equipment.

On the other hand, and as provided above, the electronic control system of the robotic vehicle 1, integrated in the transportable box 9, consists of a high-capacity management unit with embedded computer architecture and local control plates to command the elements.

Energy source is provided by an electric energy storage group formed by lithium-ion batteries, capable of providing energy for typical missions of up to 4 hours.

The robotic vehicle 1 is remote controlled by means of the control equipment that takes the form of the box 9, which consists of the following:
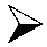 a display screen 12 of images from the cameras of the robotic vehicle 1, of the conditions of use and full telemetry;
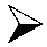 a touch screen 13, horizontally arranged, which takes on functions of real interface with the operator, having the menus, modes of action and all of the commands, and;
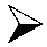 an HMI interface device formed by an intuitively operated game controller "gamepad" by means of which the entire robotic vehicle is operated.

Data transmission between the control box 9 and the robotic vehicle 1 is carried out by means of a digital radio link, with highly secure modulation and encryption; alternatively, it can also be connected by means of an optical fiber cable line as required by the conditions or the operator.

This way, the control center, based on the box 9, is fully transportable and has its own supply of energy by means of the use of the latest lithium batteries.

The robotic vehicle 1 can have up to ten video cameras to see the surroundings, which can be optical and fixed-position cameras or have total control with respect to movements and zoom, infrared lighting, infrared vision and thermographic cameras.

Likewise, it can have laser and ultrasound obstacle sensors.

With the purpose of moving and approaching the desired site and performing perimeter surveillance functions, the robotic vehicle 1 has global positioning technology (GPS or similar) and inertial sensors (accelerometers in its shafts) such that it can know its position with precision as well as its variations relative to the same, even without the coverage of the global position satellite systems.

The interface of the operator makes it possible to design routes set out on a map, such that the vehicle, by means of the systems described above, can move independently towards the desired site or travel during continuous surveillance missions. Obstacle sensors, combined with image recognition, allow the robot, in the presence of obstacles, to have intelligence to overcome them and trace slight variations to the programmed route.

The control of the robotic vehicle 1, formed by the box 9 with the display and control elements thereof, has the capacity to connect to the worldwide web, such that the ongoing mission can be seen or the entire system can be controlled from anywhere in the world. This way, it is highly useful in training or even in decision-making processes in sensitive missions, where said decisions can be made anywhere in the world.

For practical purposes, said connectivity also enables a diagnostic of the status of the robotic vehicle such that it can be used as a technical intervention.

The robotic vehicle has connectivity systems to connect to new technologies such that, by means of the correct interface and applications especially designed for said purpose, the robotic vehicle can be controlled by means of the latest mobile devices, so that multiple operator interfaces can coexist by giving up or assuming the command thereof.

The operator-robotic vehicle communication method, by means of "quick start", allows the vehicle to be controlled through the gamepad without the use or startup of the control center arranged in the box.

This function is only valid for short distances and allows the robotic vehicle to be deployed from its transportation to its preparation for the mission, while the equipment deploys its contingent or starts up the main control system, being especially useful to reduce times of action in critical situations.

## Claims

1. A remote-controlled robotic vehicle, of the type of robotic vehicles provided with running means and an articulated arm which terminates in a clamp, and which is remote controlled to carry out different risky operations by means of control equipment, wherein
• the robotic vehicle (1) comprises:
∘ two wheel sets (2), one at each side, with three wheels each, each wheel set (2) being actuated by corresponding motors (19);
∘ two caterpillar track sets (3), one at each side inside the wheel sets (2), slightly above the wheel sets (2);
∘ a first hydraulic articulated arm (4) mounted, through double joint means (7), on a 360° rotating turret (6) by the central axis (18), wherein the first hydraulic articulated arm (4) is defined by three segments (4a, 4b and 4c), the third segment (4c) being provided with ±90° lateral rotation and a first clamp (10) being provided with endless rotation;
∘ a second electric articulated arm (5) that rotates with respect to a vertical mounting axis (8), and;
which robotic vehicle (1) is remote controlled by:
• control equipment integrated in a box (9), which comprises:
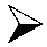 a display screen (12) of images sent by cameras mounted on the robotic vehicle;
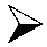 a touch screen (13) in a horizontal interface position with the operator, and;
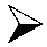 an HMI interface device defined by a gamepad;
such that, with the two wheel sets (2) and the two caterpillar track sets (3), it moves along all kinds of ground, and with the combined movements of the two articulated arms (4) and (5), it holds and handles the objects to be examined according to the orders given by the operator from the control equipment, based on the transportable box (9).

2. The remote-controlled robotic vehicle according to claim 1, **characterized in that** each lateral drive wheel set (2) is actuated by an electric motor, having traction in a differential manner and providing direction and rotation.

3. The remote-controlled robotic vehicle according to claim 1, **characterized in that** the two wheel sets (2) and the two caterpillar track sets (3) move simultaneously.

4. The remote-controlled robotic vehicle according to claim 1, **characterized in that** the weight handling capacity of the first articulated arm (4) varies depending on the articulation positions.

5. The remote-controlled robotic vehicle according to claim 1, **characterized in that** the second articulated arm (5) is defined by three segments (5a, 5b and 5c), the third segment (5c) being provided with 360° rotation with respect to the longitudinal axis and a second clamp (11) being provided with endless rotation.

6. The remote-controlled robotic vehicle according to claim 1, **characterized in that** the first clamp (10) of the first hydraulic articulated arm (4) is provided with a pressure sensor associated with the supply of flow and pressure, being able to regulate and know the precise force exerted on the object to be handled.

7. The remote-controlled robotic vehicle according to claim 1, **characterized in that** the force or pressure exerted by the second clamp (11) of the second articulated arm (5) is controlled by the control of the electric current of the motor actuating the same.

8. The remote-controlled robotic vehicle according to claim 1, **characterized in that** the control means of the robotic vehicle (1) have a spatial calculation system, and whenever the control operator of the robotic vehicle (1) selects the position of the corresponding clamp with respect to the object to be handled, the articulated arm will carry out the precise and simultaneous movements of its different segments to position itself optimally for the handling of the object.

9. The remote-controlled robotic vehicle according to claim 1, **characterized in that** the first clamp (10) of the first articulated arm (4) is provided at its ends (15) with mechanical joints (14) having a short range which, associated to inner springs (16) thereof, shall be the ones to withstand the pressure exerted on the object to be handled, when dealing with small weights.

10. The remote-controlled robotic vehicle according to claims 1 and 8, **characterized in that** the inner springs (16) of the first clamp (10) of the first articulated arm (4) are associated with electronic distance sensors (17).

11. The remote-controlled robotic vehicle according to claims 1 and 8, **characterized in that** as of a certain compression of the mechanical joints, a highly resistant mechanical stop is produced, as of which the first clamp (10) keeps compressing outside of the force detection range of the electronic sensors (17), and the hydraulic pressure sensor, associated with the hydraulic circuit, being the one detecting and providing the exerted force.

12. The remote-controlled robotic vehicle according to claim 1, **characterized in that** the robotic vehicle (1) incorporates inertial sensors based on accelerometers associated with the drive shaft of the wheel set (2), having its global positioning and being able to move autonomously according to the routes set by the operator in the control equipment based on the box (9) integrating the control means.

13. The remote-controlled robotic vehicle according to claim 1, **characterized in that** the robotic vehicle (1) incorporates obstacle sensors.

14. The remote-controlled robotic vehicle according to claim 1, **characterized in that** the control equipment, based on the box (9) integrating the control means, incorporates means to connect to Internet to be controlled from anywhere.

15. The remote-controlled robotic vehicle according to claim 1, **characterized in that** the control equipment, based on the box (9) integrating the control means, incorporates means to connect to mobile devices.

## Patentansprüche

1. Ferngesteuertes Roboterfahrzeug von der Art von Roboterfahrzeugen, die mit einer Laufeinrichtung und einem gelenkigen Arm versehen sind, der in einer Halteeinrichtung mündet, und das ferngesteuert ist, um unterschiedliche gefährliche Vorgänge mittels einer Steuerungsanlageauszuführen, wobei
das Roboterfahrzeug (1) umfasst:
zwei Radgruppen (2), eine auf jeder Seite, mit jeweils drei Rädern, wobei jede Radgruppe (2) durch entsprechende Motoren (19) angetrieben ist;
zwei Raupenfahrwerksgruppen (3), eine auf jeder Seite an den Radgruppen (2), die geringfügig über den Radgruppen (2) angeordnet sind;
einen ersten hydraulischen gelenkigen Arm (4), der durch eine Doppelgelenkseinrichtung (7) auf einem um 360° um die zentrale Achse (18) drehbaren Turm (6) montiert ist, wobei der erste hydraulische gelenkigen Arm (4) durch drei Segmente (4a, 4b und 4c) gebildet ist, wobei das dritte Segment (4c) mit einer seitlichen ± 90° Drehfähigkeit versehen ist und eine erste Halteeinrichtung (10) mit Endlosdrehung vorgesehen ist;
einen zweiten elektrischen gelenkigen Arm (5), der in Bezug auf eine vertikale Montageachse (8) drehbar ist, und
wobei das Roboterfahrzeug (1) ferngesteuert ist durch:
eine Steuerungsanlage, die in einem Gehäuse (9) integriert ist, und die aufweist:
einen Anzeigebildschirm (12) für Bilder, die von Kameras gesendet werden, die an dem Roboterfahrzeug montiert sind;
einen Berührbildschirm (13) an einer horizontalen Schnittstellenposition in Bezug auf den Bediener, und
eine HMI-Schnittstelleneinrichtung, die durch ein Gamepad gebildet ist;
derart, dass das Fahrzeug mit den beiden Radgruppen (2) und den beiden Raupenfahrwerksgruppen (3) über alle Arten von Untergrund bewegbar ist und mit den kombinierten Bewegungen der beiden gelenkigen Arme (4) und (5) es die Objekte hält und handhabt, die entsprechend den Befehlen zu untersuchen sind, die von dem Bediener durch die Steuerungsanlage auf der Grundlage des transportable Gehäuses (9) gegeben werden.

2. Ferngesteuertes Roboterfahrzeug nach Anspruch 1, **dadurch gekennzeichnet, dass** jede seitliche Antriebsradgruppe (2) durch einen Elektromotor angetrieben ist, der Traktion in differentieller Weise und Richtung und Drehung bietet.

3. Ferngesteuertes Roboterfahrzeug nach Anspruch 1, **dadurch gekennzeichnet, dass** die beiden Radgruppen (2) und die beiden Raupenfahrwerksgruppen (3) gleichzeitig bewegbar sind.

4. Ferngesteuertes Roboterfahrzeug nach Anspruch 1, **dadurch gekennzeichnet, dass** die Fähigkeit zur Handhabung eines Gewichts des ersten gelenkigen Arms (4) in Abhängigkeit von den Gelenksstellungen variierbar ist.

5. Ferngesteuertes Roboterfahrzeug nach Anspruch 1, **dadurch gekennzeichnet, dass** der zweite gelenkige Arm (5) durch drei Segmente (5a, 5b und 5c) gebildet ist, wobei das dritte Segment (5c) mit einer 360°-Drehfähigkeit in Bezug auf die Längsachse und mit einer zweiten Halteeinrichtung (11) mit Endlosdrehung versehen ist.

6. Ferngesteuertes Roboterfahrzeug nach Anspruch 1, **dadurch gekennzeichnet, dass** die erste Halteeinrichtung (10) des ersten hydraulischen gelenkigen Arms (4) mit einem Drucksensor versehen ist, der mit einer Druck und Strömung bereitstellenden Versorgung verbunden und ausgebildet ist, die exakte Kraft zu regeln und zu ermitteln, die auf das zu handhabende Objekt ausgeübt wird.

7. Ferngesteuertes Roboterfahrzeug nach Anspruch 1, **dadurch gekennzeichnet, dass** die Kraft oder der Druck, der durch die zweite Halteeinrichtung (11) des zweiten gelenkigen Arms (5) ausgeübt wird, durch das Steuern des elektrischen Stroms des Motors, der für den Antrieb dient, gesteuert ist.

8. Ferngesteuertes Roboterfahrzeug nach Anspruch 1, **dadurch gekennzeichnet, dass** die Steuereinrichtung des Roboterfahrzeugs (1) ein räumliches Berechnungssystem aufweist, und sobald der steuernde Bediener des Roboterfahrzeugs (1) die Stellung der entsprechenden Halteeinrichtung in Bezug auf das zu handhabende Objekt auswählt, der gelenkige Arm die exakten und simultanen Bewegungen seiner unterschiedlichen Segmente so ausführt, dass er sich optimal für die Handhabung des Objekts positioniert.

9. Ferngesteuertes Roboterfahrzeug nach Anspruch 1, **dadurch gekennzeichnet, dass** die erste Halteeinrichtung (10) des ersten gelenkigen Arms (4) an ihren Enden (15) mit mechanischen Gelenken (14) mit kurzer Reichweite versehen ist, die in Verbindung mit inneren Federn (16) diejenigen sind, die dem Druck standhalten, der auf das zu handhabende Objekt ausgeübt wird, wenn eine Handhabung kleiner Gewichte erfolgt.

10. Ferngesteuertes Roboterfahrzeug nach Anspruch 1 und 8, **dadurch gekennzeichnet, dass** die inneren Federn (16) der ersten Halteeinrichtung (10) des ersten gelenkigen Arms (4) mit elektronischen Abstandssensoren (17) in Verbindung stehen.

11. Ferngesteuertes Roboterfahrzeug nach Anspruch 1 und 8, **dadurch gekennzeichnet, dass** bei einer gewissen Kompression der mechanischen Gelenke ein äußerst widerstandsfähiger mechanischer Stopp hervorgerufen wird, mit welchem die erste Halteeinrichtung (10) weiterhin außerhalb des Krafterfassungsbereichs der elektronischen Sensoren (17) eine Kompression ausübt und der hydraulische Drucksensor, der mit dem Hydraulikkreis verbunden ist, derjenige ist, der die ausgeübte Kraft erfasst und bereitstellt.

12. Ferngesteuertes Roboterfahrzeug nach Anspruch 1, **dadurch gekennzeichnet, dass** das Roboterfahrzeug (1) Trägheitssensoren auf der Grundlage von Beschleunigungsmessern enthält, die mit der Antriebswelle der Radgruppe (2) verbunden sind, sodass eine globale Positionierung vorgesehen ist und die Möglichkeit gegeben ist, sich autonom entsprechend den Routen zu bewegen, die von dem Bediener in der Steuerungsanlage auf der Grundlage des Gehäuses (9), in der die Steuereinrichtung integriert ist, vorgegeben werden.

13. Ferngesteuertes Roboterfahrzeug nach Anspruch 1, **dadurch gekennzeichnet, dass** das Roboterfahrzeug (1) Sensoren für Hindernisse enthält.

14. Ferngesteuertes Roboterfahrzeug nach Anspruch 1, **dadurch gekennzeichnet, dass** die Steuerungsanalage auf der Grundlage des Gehäuses (1), das die Steuereinrichtung enthält, eine Einrichtung aufweist, um eine Verbindung zu dem Internet herzustellen, sodass eine Steuerung von einem beliebigen Ort aus möglich ist.

15. Ferngesteuertes Roboterfahrzeug nach Anspruch 1, **dadurch gekennzeichnet, dass** die Steuerungsanlage auf der Grundlage des Gehäuses (9), das die Steuereinrichtung enthält, eine Einrichtung zur Verbindung mit mobilen Geräten aufweist.

## Revendications

1. Véhicule robotique contrôlé à distance, du type de véhicules robotiques équipés de moyens d'entraînement et un bras articulé qui se termine par une pince, et qui est contrôlé à distance afin d'effectuer différentes opérations risquées au moyen d'un équipement de contrôle,
• le véhicule robotique (1) comprenant :
° deux ensembles de roues (2), un de chaque côté, avec trois roues chacun, chaque ensemble de roues (2) étant actionné par des moteurs correspondants (19) ;
° deux ensembles de chenilles (3), un de chaque côté à l'intérieur des ensembles de roues (2), légèrement au-dessus des ensembles de roues (2) ;
° un premier bras hydraulique articulé (4) monté, par l'intermédiaire de moyens à double jonction (7), sur une tourelle (6) tournant à 360° par l'axe central (18), le premier bras hydraulique articulé (4) étant défini par trois segments (4a, 4b et 4c), le troisième segment (4c) étant prévu avec une rotation latérale de ±90° et une première pince (10) étant prévue avec une rotation sans fin ;
° un deuxième bras articulé électrique (5) qui tourne par rapport à un axe de montage vertical (8), et ;
ce véhicule robotique (1) étant contrôlé par :
• un équipement de contrôle intégré dans un boîtier (9), qui comprend :
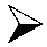 un écran d'affichage (12) pour des images envoyées par des caméras montées sur le véhicule robotique ;
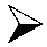 un écran tactile (13) dans une position d'interface horizontale avec l'opérateur, et ;
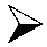 un dispositif d'interface HMI défini par une manette de jeux ;
de façon à ce que, avec les deux ensembles de roues (2) et les deux ensembles de chenilles (3), il se déplace sur tous types de sol et, avec les mouvements combinés des deux bras articulés (4) et (5), il tienne et manipule les objets à examiner conformément aux ordres donnés par l'opérateur à partir de l'équipement de contrôle, disposé dans le boîtier transportable (9).

2. Véhicule robotique contrôlé à distance selon la revendication 1, **caractérisé en ce que** chaque ensemble de roues d'entraînement latéral (2) est actionné par un moteur électrique, avec une traction différentielle et permettant la direction et la rotation.

3. Véhicule robotique contrôlé à distance selon la revendication 1, **caractérisé en ce que** les deux ensembles de roues (2) et les deux ensembles de chenilles (3) se déplacent simultanément.

4. Véhicule robotique contrôlé à distance selon la revendication 1, **caractérisé en ce que** la capacité de la manipulation d'un poids du premier bras articulé (4) varie en fonction des positions de l'articulation.

5. Véhicule robotique contrôlé à distance selon la revendication 1, **caractérisé en ce que** le deuxième bras articulé (5) est défini par trois segments (5a, 5b et 5c), le troisième segment (5c) permettant une rotation à 360° par rapport à l'axe longitudinal et une deuxième pince (11) pouvant effectuer une rotation sans fin.

6. Véhicule robotique contrôlé à distance selon la revendication 1, **caractérisé en ce que** la première pince (10) du premier bras articulé hydraulique (4) est munie d'un capteur de pression associé à l'alimentation de débit et de pression, capable de réguler et de connaître précisément la force exercée sur l'objet à manipuler.

7. Véhicule robotique contrôlé à distance selon la revendication 1, **caractérisé en ce que** la force ou la pression exercée par la deuxième pince (11) du deuxième bras articulé (5) est contrôlée par le contrôle du courant électrique du moteur actionnant celui-ci.

8. Véhicule robotique contrôlé à distance selon la revendication 1, **caractérisé en ce que** les moyens de contrôle du véhicule robotique (1) comprennent un système de calcul spatial et, lorsque l'opérateur de contrôle du véhicule robotique (1) sélectionne la position de la pince correspondante par rapport à l'objet à manipuler, le bras articulé effectue les mouvements précis et simultanés de ses différents segments afin de se positionner de manière optimale pour la manipulation de l'objet.

9. Véhicule robotique contrôlé à distance selon la revendication 1, **caractérisé en ce que** la première pince (10) du premier bras articulé (4) est muni, à ses extrémités (15), de jonctions mécaniques (14) ayant une courte portée qui, associés, ressorts internes (16) de celui-ci, doivent résister à la pression exercée sur l'objet à manipuler lors de la manipulation de faibles poids.

10. Véhicule robotique contrôlé à distance selon l'une des revendications 1 à 8, **caractérisé en ce que** les ressorts internes (16) de la première pince (10) du premier bras articulé (4) sont associés à des capteurs de distance électroniques (17).

11. Véhicule robotique contrôlé à distance selon l'une des revendications 1 à 8, **caractérisé en ce que**, dès une certaine compression des jonctions mécaniques, un arrêt mécanique hautement résistant est produit, à partir duquel la première pince (10) continue de comprimer hors de la portée de détection de la force des capteurs électronique (17) et le capteur de pression hydraulique, associé au circuit hydraulique étant celui qui détecte et indique la force exercée.

12. Véhicule robotique contrôlé à distance selon la revendication 1, **caractérisé en ce que** le véhicule robotique (1) comprend des capteurs inertiels basés sur les accéléromètres associés à l'arbre d'entraînement de l'ensemble de roues (2), ayant un positionnement global et étant capable de se déplacer de manière autonome selon les itinéraires réglés par l'opérateur dans l'équipement de contrôle disposé dans le boîtier (9) intégrant les moyens de contrôle.

13. Véhicule robotique contrôlé à distance selon la revendication 1, **caractérisé en ce que** le véhicule robotique (1) comprend des détecteurs d'obstacles.

14. Véhicule robotique contrôlé à distance selon la revendication 1, **caractérisé en ce que** l'équipement de contrôle, disposé dans le boîtier (9) intégrant les moyens de contrôle, comprend des moyens permettant de se connecter à Internet afin de permettre un contrôle à partir d'un endroit quelconque.

15. Véhicule robotique contrôlé à distance selon la revendication 1, **caractérisé en ce que** l'équipement de contrôle, disposé dans le boîtier (9) intégrant les moyens de contrôle, comprend des moyens permettant de se connecter à des dispositifs mobiles.
